# EUROPÄISCHE PATENTSCHRIFT

(11) **EP 0 587 961 B1**
(45) Veröffentlichungstag und Bekanntmachung des Hinweises auf die Patenterteilung: **17.04.1996**
(21) Anmeldenummer: 92810714.3
(22) Anmeldetag: 17.09.1992
(51) Int. Cl.: A01K 1/01

(54) **Dungräumeinrichtung mit einer Förderschnecke**
Dung removal equipment with a conveyor screw
Installation pour enlever le fumier avec une vis transporteuse

(43) Veröffentlichungstag der Anmeldung: 23.03.1994
(73) Patentinhaber: Krebs, Arthur, CH-8633 Wolfhausen (CH)
(72) Erfinder: Krebs, Arthur, CH-8633 Wolfhausen (CH)
(74) Vertreter: Bosshard, Ernst

(56) Entgegenhaltungen:
- EP-A- 0 225 291
- EP-A- 0 353 159
- EP-A- 0 394 198
- WO-A-89/10886
- DE-A- 2 717 337

## Beschreibung

Die Erfindung bezieht sich auf eine Dungräumeinrichtung mit einem Einwurfschacht, einem Förderrohr und einer in diesem drehbar angeordneten, motorisch angetriebenen Förderschnecke.

Aus der EP-A 0 394 198 ist eine Dung- und Komposträumeinrichtung bekannt, hei der im Bereich eines Einwurfschachtes eine gewölbte, oben offene Schale vorhanden ist, an die sich ein rundes, mit Längsrippen versehenes Förderrohr anschliesst. Diese Dungräumeinrichtung eignet sich für mit langfaserhaltigem Gut durchsetzten Kuhdung, der durch cine Förderschnecke entlang der Schale und des Förderrohres transportiert wird. Die Erfahrung zeigt, dass andere Mistarten Förderschwierigkeiten ergeben, namentlich zu Verstopfungen führen.

Mit der Erfindung soll die Aufgabe gelöst werden, eine insbesondere für relativ kompakte Mistarten, wie Pferdemist, geeignete Räumeinrichtung zu schaffen.

Diese Aufgabe wird durch die im Kennzeichen des Anspruches 1 genannten Merkmale gelöst.

Dadurch ist es möglich, auch relativ kompaktere Mistarten, namentlich Pferdemist, mit wenig Flüssigkeitsanteil ohne Verstopfungsgefahr mittels einer relativ langen Förderschnecke zu fördern. Die Viereckform verhindert dabei ein Mitdrehen des Fördergutes. Da mechanische Stützlager für die Förderschnecke zum Transport des Fördergutes entlang des Förderrohres stark stören würden und Ursache für Verstopfungen bilden würden, wird der sich am Förderrohrausgang bildende, relativ kompakte Propfen aus dem auszustossenden Fördergut als Lager für die Förderschnecke benutzt.

In der Zeichnung ist ein Außführungsbeispiel des Erfindungsge-genstandes dargestellt. Es zeigen:

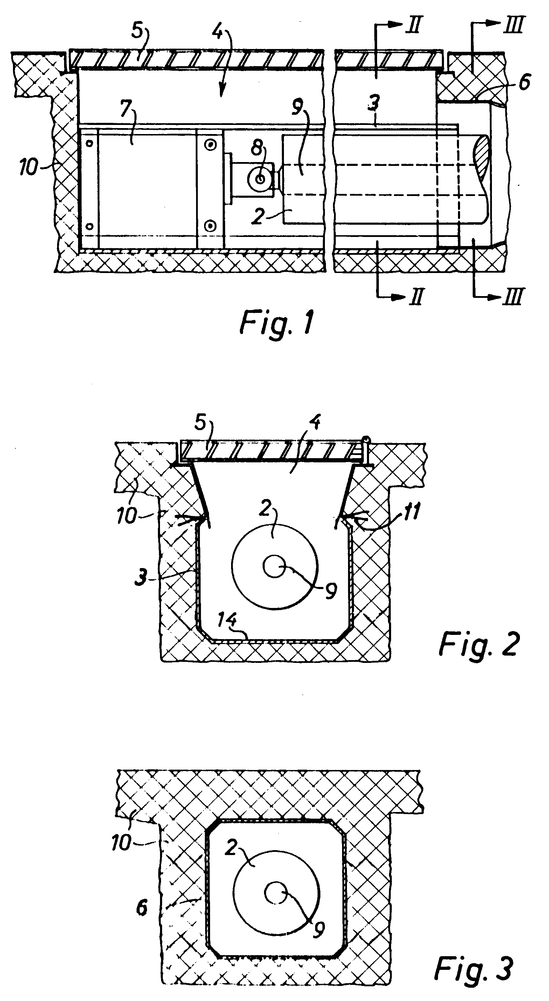

- Fig. 1: einen Vertikalschnitt durch die Dungräumeinrichtung
- Fig. 2: einen Schnitt nach der Linie II-II in Fig. 1
- Fig. 3: einen Schnitt nach der Linie III-III in Fig. 1

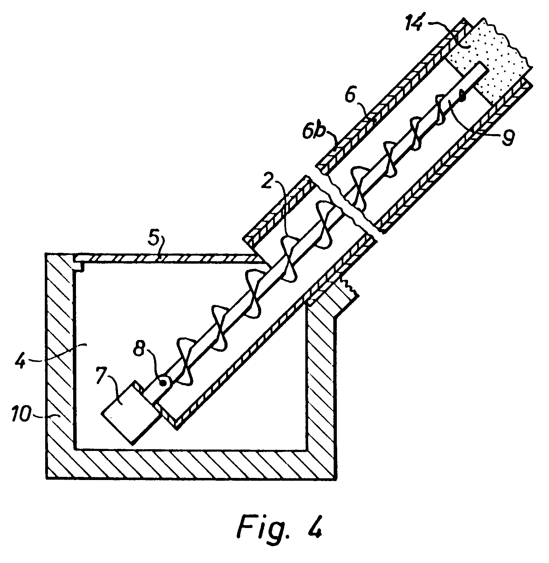

- Fig. 4: einen Längsschnitt durch eine Fördereinrichtung
Oberhalb eines Einwurfschachtes 4 für den Dung befindet sich ein Gitterrost 5, der so grobmaschig ist, dass Pferdemist oder dergleichen hindurchfallen kann. Am Grund des Einwurfschachtes 4 befindet sich ein Antriebsmotor 7, der ein Elektromotor oder ein Hydraulikmotor sein kann. Dieser Antriebsmotor 7 treibt über ein Gelenk 8 eine Förderschnecke 2 an sich bekannter Bauart mit einem mittigen Kernrohr 9 an. Im Bereich des Einwurfschachtes 4 befindet sich eine oben offene Schale 3, die im wesentlichen einen U-förmigen Querschnitt mit flachem Boden 14 hat. Diese Schale 3 ist durch eingemauerte Bügel 11 oder dergleichen in den den Schacht umgebenden Betonmauern 10 befestigt. Die Schale 3 mündet in ein Vierkant-Förderrohr 6 ein, das einen im wesentlichen quadratischen Querschnitt hat, wobei die Ecken leicht abgeflacht sind. Die Breite dieses Förderrohres 6 ist etwas geringer als die Breite der Schale 3. Sowohl die Schale 3 als auch das Förderrohr 6 bestehen aus Kunststoff, vorzugsweise aus PVC.

Eine gute Förderleistung wird erreicht, wenn der Durchmesser der Förderschnecke 2 etwa 4/5 des Abstandes der beiden Vertikalwände des Fördorrohres, vorzugsweise etwa das 0,8-fache beträgt.

Die Förderschnecke 2 wird ausgangsseitig konisch ausgebildet, mit abnehmendem Durchmesser gegen das Auslassende hin. Ausserdem hat der rohrförmige Korn - welcher als direkter Fortsatz der Förderschnecke ausgebildet ist - in seinem vordersten Teil eine zylindrische Form, dessen Ende gegenüber dem Förderrohrende zurückversetzt ist. Die Förderschnecke 2 ist nur am antriebseitigen Ende gelenkig gelagert und im Förderrohr 6 fliegend ausgebildet, d.h. es sind keine mechanischen Stützlager vorhanden, da diese das Ausstossen des Fördergutes behindern würden. Durch das Zurücksetzen des Förderrohrkernes 9 gegenüber dem Auslass-Förderrohrende entsteht nach der erstmaligen Inbetriebsetzung ein dichtgepresster Fördergutpfropfen, der am Ausgang des Förderrohres 6 die Förderschnecke 2 stützt und zentriert. Je grösser der Abstand des Kernendes vom Förderrohrende ist, um so grösser wird die Presswirkung auf den auszustossenden Fördergutkuchen, sodass bei nassem Fördergut gleichzeitig eine Entwässerung des Fördergutes stattfinden kann, Zum Abfluss der ausgepressten Flüssigkeit kann das Förderrohr 6 mindestens auf einem Teil seiner Länge, vorzugsweise auf einer Teillänge der auslasseitigen Hälfte perforiert sein mit Abflussleitung in eine Jauchegrube oder dergleichen.

Die Förderschnecke 2 und das sie umgebende Förderrohr können relativ lang ausgebildet werden, beispielsweise bis 50 m. Die Länge des Förderrohres beträgt Ublicherweise mehr als das 20-fache des Förderschneckendurchmessers.

Es hat sich als zweckmässig herausgestellt, das Schneckenwellenrohr 9 doppelwandig auszubilden, indem zwei Rohre satt ineinander geschoben werden und mit der Spirale zu verschweissen. Dadurch erhöht sich die Scherfestigkeit der Schneckenwelle und ihre Elastizität, verglichen mit einer einstückigen Welle gleicher Wandstärke.

Für den Dungtransport von einer Dunggrube zu einem höher gelegenen Mistsammelplatz ist eine Aufwärtsförderung mit einer Rohrneigung bis etwa 45° möglich. Dieses Förderrohr 6 wird mit einer Verschalung 6b gegen Bruch und U-V-Strahlen geschützt.

## Patentansprüche

1. Dungräumeinrichtung, insbesondere für Pferdemist, mit einem Einwurfschacht (4), einem Förderrohr (6) und einer in diesem drehbar angeordneten, motorisch angetriebenen, antriebsseitig gelenkig gelagerten Förderschnecke (2), wobei die Förderschnecke (2) gegenüber der Innenwand des Förderrohres (6) einen radialen Abstand hat, dadurch gekennzeichnet, dass das Förderrohr (6) als Vierkantrohr ausgebildet ist, die Windungen der Förderschnecke (2) gegenüber dem auslassseitigen Ende des Förderrohres (6) zurückversetzt sind und der anschliessende zylindrische Förderschneckenkern (9) in einem am Förderrohrendbereich gebildeten Fördergutpfropfen (14) gelagert ist und dass die Förderschnecke (2) zwischen dem Fördergutpfropfen (14) und dem antriebsseitigen Gelenk (8) stützenlos ausgebildet ist.

2. Dungräumeinrichtung nach Anspruch 1, dadurch gekennzeichnet, dass der Förderschneckendurchmesser etwa 4/5 des Abstandes zwischen den beiden Vertikalwänden des Vierkant-Förderrohres (6) beträgt.

3. Dungräumeinrichtung nach Anspruch 1 oder 2, dadurch gekennzeichnet, dass die Förderschnecke (2) auf einem Teil ihrer Länge konisch ausgebildet ist mit abnehmendem Durchmesser gegen das Auslassende hin.

4. Dungräumeinrichtung nach einem der Ansprüche 1-3, dadurch gekennzeichnet, dass die Förderschneckenwelle (9) zwei satt ineinander liegende Rohre aufweist.

5. Dungräumeinrichtung nach einem der Ansprüche 1-4, dadurch gekennzeichnet, dass das Förderrohr (6) mindestens entlang eines Teiles der auslasseitigen Hälfte perforiert ist.

6. Dungräumeinrichtung nach einem der Ansprüche 1-5, dadurch gekennzeichnet, dass das Förderrohr (6) aus Kunststoff, vorzugsweise PVC, besteht.

7. Dungräumeinrichtung nach einem der Ansprüche 1-6, dadurch gekennzeichnet, dass das Förderrohr (6) zur Aufwärtsförderung eine Rohrneigung bis 45° hat und von einer Schutzpanzerung (6b) ungeben ist.

8. Dungräumeinrichtung nach einem der Ansprüche 1-7, dadurch gekennzeichnet, dass die Länge des Förderrohres mehr als das zwanzigfache des Förderschneckendurchmessers beträgt.

## Claims

1. Dung removal equipment, in particular for horse manure, having a charging shaft (4), a conveyor pipe (6) and a motor-driven conveyor screw (2) disposed rotatably therein and articulated on the driving side, whereby the conveyor screw (2) has a radial spacing from the inner wall of the conveyor pipe (6),
**characterised in that** the conveyor pipe (6) is constructed as a rectangular pipe, the turns of the conveyor screw (2) are set back in relation to outlet-side end of the conveyor pipe (6) and the connected cylindrical conveyor screw core is lodged in a stopper (14) of material to be conveyed formed at the end region of the conveyor pipe,
**and in that** the conveyor screw (2) is constructed without any means of support between the stopper (14) of material to be conveyed and the drive-side articulation (8).

2. Dung removal equipment according to Claim 1,
**characterised in that** the diameter of the conveyor screw is roughly 4/5 of the distance between the two vertical walls of the rectangular conveyor pipe (6).

3. Dung removal equipment according to Claim 1 or 2,
**characterised in that** the conveyor screw (2) has a conical construction over a part of its length, with its diameter decreasing towards the outlet end.

4. Dung removal equipment according to one of Claims 1-3,
**characterised in that** the conveyor screw shaft (9) has two pipes lying tightly inside one another.

5. Dung removal equipment according to one of Claim 1-4,
**characterised in that** the conveyor pipe (6) is perforated at least along one part of the outlet-side half.

6. Dung removal equipment according to one of Claims 1-5,
**characterised in that** the conveyor pipe (6) is made from plastics, preferably PVC.

7. Dung removal equipment according to one of Claims 1-6,
**characterised in that** the conveyor pipe (6) has a pipe inclination of up to 45° for forward conveyance and is surrounded by a protective cladding (6b).

8. Dung removal equipment according to one of Claims 1-7,
**characterised in that** the length of the Conveyor pipe is more than twenty times the diameter of the conveyor screw.

## Revendications

1. Installation pour évacuer du fumier, notamment du fumier de cheval, comportant une trémie de réception (4), un tube de transfert (6) et une vis transporteuse (2) montée à rotation dans le tube, cette vis étant entraînée par un moteur et montée de manière articulée du côté de l'entraînement, la vis transporteuse (2) présentant un intervalle radial par rapport à la paroi intérieure du tube de transfert (6), caractérisée en ce que le tube de transfert (6) est un tube à quatre côtés et les spires de la vis transporteuse (2) sont en retrait par rapport à l'extrémité du côté sortie du tube transporteur (6), et le corps cylindrique (9) de la vis transporteuse, adjacent, est monté dans un bouchon de produit à transférer (14) dans la zone d'extrémité du tube de transfert, la vis de transfert (2) ne comportant pas d'appui entre le bouchon de produit à transférer (14) et l'articulation (8) du côté de l'entraînement.

2. Installation d'évacuation de fumier selon la revendication 1, caractérisée en ce que le diamètre de la vis de transfert correspond sensiblement à 4/5 de la distance entre deux parois verticales du tube de transfert à quatre côtés (6).

3. Installation d'évacuation de fumier selon la revendication 1 ou 2, caractérisée en ce que la vis de transfert (2) est de forme conique sur une partie de sa longueur, le diamètre diminuant vers l'extrémité de sortie.

4. Installation d'évacuation de fumier selon l'une des revendications 1 à 3, caractérisée en ce que l'axe (9) de la vis transporteuse se compose de deux tubes insérés étroitement.

5. Installation d'évacuation de fumier selon l'une des revendications 1 à 4, caractérisée en ce que le tube de transfert (6) est perforé au moins le long d'une partie de la moitié située du côté de la sortie.

6. Installation d'évacuation de fumier selon l'une des revendications 1 à 5, caractérisée en ce que le tube de transfert (6) est en matière plastique, de préférence en PVC.

7. Installation d'évacuation de fumier selon l'une des revendications 1 à 6, caractérisée en ce que le tube de transfert (6) a une pente allant jusqu'à 45° dans la direction montante et est entouré d'un renforcement de protection (6b).

8. Installation d'évacuation de fumier selon l'une quelconque des revendications 1 à 7, caractérisée en ce que la longueur du tube de transfert est supérieure à plus de vingt fois le diamètre de la vis de transfert.
